# EUROPEAN PATENT APPLICATION

(11) **EP 1 367 590 A2**
(43) Date of publication of application: **03.12.2003**
(21) Application number: 03252700.4
(22) Date of filing: 29.04.2003
(51) Int. Cl.: G11B 27/034, G11B 20/10, G11B 27/10, G11B 27/34, G11B 19/02

(54) **Music recording/reproducing apparatus, list generation method, and information recording medium**

(30) Priority: 31.05.2002 JP 2002158792
(71) Applicant: Pioneer Corporation, Tokyo-to (JP); Tech Experts Incorporation, Tokyo-to (JP)
(72) Inventor: Nonaka, Yoshiya, Pioneer Corporation, Kawagoe-shi, Saitama-ken (JP); Sugino, Ryoji, c/o Pioneer Corporation, Tokyo-to (JP)
(74) Representative: Townsend, Victoria Jayne

(57) **Abstract**

A music recording/reproducing apparatus (100) has a music database for recording a plurality of pieces of music data and music information corresponding to the each piece of music data, and reproduces the music data recorded in the music database. The music recording/reproducing apparatus(100) has an album information input device(9) which receives album information from a user; a music identification device(8) which identifies the album based on the received album information and identifies the music information corresponding to each piece of the music data contained in the identified album, by referring to the album information database for recording album information corresponding to an album containing a plurality of pieces of music data and the music information corresponding to each piece of the music data contained in the album; a determination device (8) which determines whether the pieces of music data corresponding to the identified music information have being recorded in the music database; and a list generation device (8) which generates a list of the music information corresponding to the each piece of music data determined to have being recorded in the music database.

## Description

### BACKGROUND OF THE INVENTION

### Field of the Invention:

The present invention relates to technology for a music recording/reproducing apparatus which has a music database for recording a plurality of pieces of music data and music information corresponding to the each piece of music data, and reproduces the music data recorded in the music database.

### Description of the Related Art:

With increases in capacity of recording media such as HD(Hard Disk) and advancements in data compression technologies such as MP3 (MPEG Audio Layer 3) and ATRAC3 (Adaptive TRansform Acoustic Coding 3), users can now copy(record) music data contained in a number of CDs (Compact Discs), MDs (Mini Discs), and/or DVDs (Digital Versatile Discs) to a single recording medium (e.g., HD) using a music recording/reproducing apparatus to reproduce (play back) the music from the single recording medium.

Such a conventional music recording/reproducing apparatus allows the user to give titles to a large number of pieces of music data recorded on the recording medium and register the titles. Consequently, a large number of pieces of music data can be managed efficiently and the user can listen to desired piece of music data by specifying their titles.

If the user buys each CD single or CD album of a particular artist when it is released and copies(records) all pieces of the music data contained in it to an HDD, and then, when a best album or singles collection of the artist is released, i.e., when a new CD album which contains pieces of the music data contained in the CDs released in the past is released, the user has already copied (recorded) the pieces of the music data contained in the new CD album. Consequently, it is very uneconomical for the user to buy the new CD album.

Thus, generally, the user does not buy the new CD album, and enjoys the pieces of music data contained in the new CD album by simulating such an album through a complicated method of copying the pieces of the music data from the HDD to another recording medium in the order they are recorded on the new CD album or of programming the pieces of the music data to be reproduced in the order they are recorded on the new CD album.

### SUMMARY OF THE INVENTION

It is therefore an object of the present invention to provide a music recording/reproducing apparatus, a list generation method, and a information recorded medium which can easily provide a best album, singles collection, or the like using music data recorded on a recording medium.

The above object of the present invention can be achieved by a music recording/reproducing apparatus which has a music database for recording a plurality of pieces of music data and music information corresponding to the each piece of music data, and reproduces the music data recorded in the music database, provided with: an album information database for recording (storing) album information corresponding to an album containing a plurality of pieces of music data and the music information corresponding to each piece of the music data contained in the album; an album information input device which receives album information from a user; a music identification device which identifies the album based on the received album information and identifies the music information corresponding to each piece of the music data contained in the identified album, by referring to the album information database; a determination device which determines whether the pieces of music data corresponding to the identified music information have being recorded(stored) in the music database; and a list generation device which generates a list of the music information corresponding to the each piece of music data determined to have being recorded in the music database.

According to the present invention, since the apparatus identifies an album based on album information entered by the user, identifies music information corresponding to each piece of music data (musical pieces) contained in the identified album, and generates a list of the music information corresponding to the each piece of music data recorded in the music database from among identified music information, it can easily provide a best album, singles collection, or similar CD album of a desired artist to the user using the pieces of music data recorded in the music database even if the user does not buy the new CD album such as the best album, singles collection of the desired artist.

The above object of the present invention can be achieved by a music recording/reproducing apparatus which has a music database for recording a plurality of pieces of music data and music information corresponding to the each piece of music data, and reproduces the music data recorded in the music database, provided with: an access device which accesses, via a network, a server having an album information database for recording album information corresponding to an album containing a plurality of pieces of music data and the music information corresponding to each piece of the music data contained in the album; an album information input device which receives album information from a user; a music identification device which identifies the album based on the received album information and identifies the music information corresponding to each piece of the music data contained in the identified album, by referring to the album information database in the server through the access device; a determination device which determines whether the pieces of music data corresponding to the identified music information have being recorded in the music database; and a list generation device which generates a list of the music information corresponding to the each piece of music data determined to have being recorded in the music database.

According to the present invention, since the apparatus identifies an album based on album information entered by the user, identifies music information corresponding to each piece of music data (musical pieces) contained in the identified album, and generates a list of the music information corresponding to the each piece of music data recorded in the music database from among identified music information, it can easily provide a best album, singles collection, or similar CD album of a desired artist to the user using the pieces of music data recorded in the music database even if the user does not buy the new CD album such as the best album, singles collection of the desired artist.

Moreover, since the album information database installed on the server is referenced via the network using the access device, there is no need for the music recording/reproducing apparatus to be equipped with an album information database, and thus the capacity of the recording medium can be reduced (saved). Also, the user can always use the latest album information and the music information corresponding to pieces of music data contained in the latest album.

In one aspect of the music recording/reproducing apparatus of the present invention, a list display device which displays the generated list on a display screen.

According this aspect, the user views the generated list on the display screen.

In another aspect of the music recording/reproducing apparatus of the present invention, a list recording device which records (stores) the generated list on recording medium (memory) ; a display instruction input device which receives an instruction to display the list from the user; and a list display device which reads the list from the recording medium and displays it on a display screen when the instruction to display the list is received.

According this aspect, since the generated list is recorded(stored) on the recording medium(memory), the list can be read out and displayed on the display screen anytime.

In further aspect of the music recording/reproducing apparatus of the present invention, a music selection input device which receives, form the user, an instruction to select the music information on the displayed list; and a music reproducing device which reproduces music data corresponding to the selected music information.

According this aspect, the user can regard the list as an album and listen to any piece of music data in the list anytime. Moreover, the user can easily select the piece of the music data to be reproduced from the list displayed on the display screen.

In still further aspect of the music recording/reproducing apparatus of the present invention, a reproduction instruction input device which receives, from the user, an instruction to reproduce music data corresponding to the music information contained in the generated list; and a music reproducing device which reproduces music data corresponding to the music information contained in the list when the instruction to reproduce music data is received.

According this aspect, user can regard the list as an album, and reproduce and listen to any piece of music data in the list anytime. Moreover, the user can listen to the piece of the music data in the list without displaying them on the display screen.

The above object of the present invention can be achieved by a list generation method for a music recording/ reproducing apparatus which has a music database for recording a plurality of pieces of music data and music information corresponding to the each piece of music data, and reproduces the music data recorded in the music database, provided with: a process of receiving album information from a user; a process of identifying the album based on the received album information and identifying the music information corresponding to each piece of the music data contained in the identified album, by referring to the album information database for recording album information corresponding to an album containing a plurality of pieces of music data and the music information corresponding to each piece of the music data contained in the album; a process of determining whether the pieces of music data corresponding to the identified music information have being recorded in the music database; and a process of generating a list of the music information corresponding to the each piece of music data determined to have being recorded in the music database.

The above object of the present invention can be achieved by a list generation method for a music recording/ reproducing apparatus which has a music database for recording a plurality of pieces of music data and music information corresponding to the each piece of music data, and reproduces the music data recorded in the music database, provided with: a process of receiving album information from a user; a process of accessing, via a network, a server having an album information database for recording album information corresponding to an album containing a plurality of pieces of music data and the music information corresponding to each piece of the music data contained in the album; a process of identifying the album based on the received album information and identifying the music information corresponding to each piece of the music data contained in the identified album, by referring to the album information database in the server through the network; a process of determining whether the pieces of music data corresponding to the identified music information have being recorded in the music database; and a process of generating a list of the music information corresponding to the each piece of music data determined to have being recorded in the music database.

The above object of the present invention can be achieved by an information recorded medium wherein a program for a computer which reproduces music data recorded in the music database for recording a plurality of pieces of music data and music information corresponding to the each piece of music data, is recorded so as to be read by the computer, the program makes the computer function as: receiving album information from a user; identifying the album based on the received album information and identifying the music information corresponding to each piece of the music data contained in the identified album, by referring to the album information database for recording album information corresponding to an album containing a plurality of pieces of music data and the music information corresponding to each piece of the music data contained in the album; determining whether the pieces of music data corresponding to the identified music information have being recorded in the music database; and generating a list of the music information corresponding to the each piece of music data determined to have being recorded in the music database.

The above object of the present invention can be achieved by An information recorded medium wherein a program for a computer which reproduces music data recorded in the music database for recording a plurality of pieces of music data and music information corresponding to the each piece of music data, is recorded so as to be read by the computer, the program makes the computer function as: receiving album information from a user; accessing, via a network, a server having an album information database for recording album information corresponding to an album containing a plurality of pieces of music data and the music information corresponding to each piece of the music data contained in the album; identifying the album based on the received album information and identifying the music information corresponding to each piece of the music data contained in the identified album, by referring to the album information database in the server through the network; determining whether the pieces of music data corresponding to the identified music information have being recorded in the music database; and generating a list of the music information corresponding to the each piece of music data determined to have being recorded in the music database.

### BRIEF DESCRIPTION OF THE DRAWINGS

FIG. 1 is a schematic block diagram of an audio apparatus;
FIG. 2 is a flowchart showing a list generation process performed by a controller 8;
FIG. 3 is a diagram showing an example of input screen of an album information on the display screen of a operation/display panel 9; and
FIG. 4 is a diagram showing an example of a list of the music information on the display screen of the operation/display panel 9.

### DETAILED DESCRIPTION OF THE PREFERRED EMBODIMENTS

A preferred embodiment of the present invention will be described with reference to the accompanying drawings. Incidentally, described below is an embodiment in which the present invention is applied to an audio apparatus.

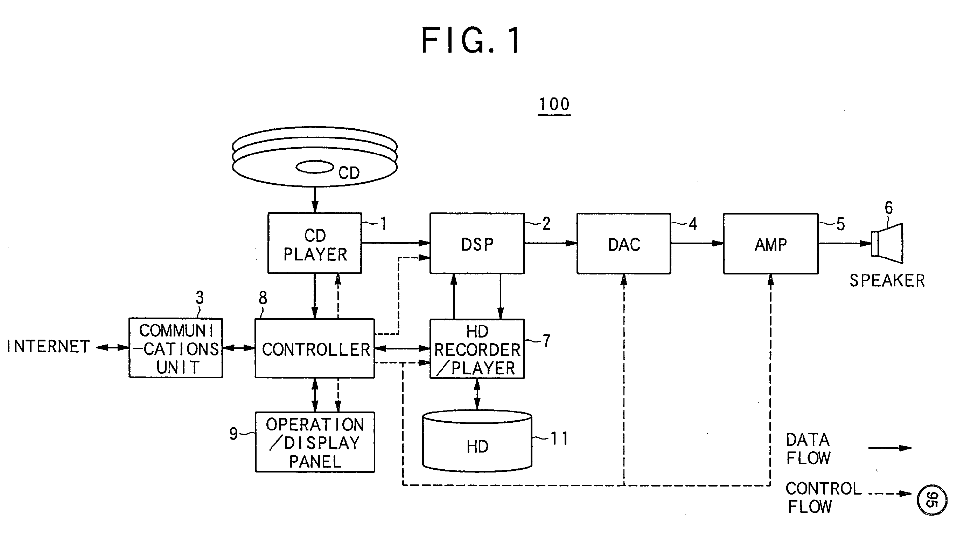

First, configuration and functions of an audio apparatus according to this embodiment will be described with reference to FIG. 1.

FIG. 1 is a schematic block diagram of the audio apparatus. As shown in FIG. 1, the audio apparatus 100 includes a CD player 1 which reproduces music data recorded on a CD 10, a DSP (Digital Signal Processor) 2 which outputs the music data reproduced by the CD player 1 after performing digital signal processing on them at high speed, a communications unit 3 for connecting to a network such as the Internet, a DAC (Digital-to-Analog Converter) 4 which performs digital-to-analog conversion on the music data outputted from the DSP 2 and outputs the resulting analog audio signal, an AMP (Amplifier) 5 which amplifies the analog audio signal outputted from the DAC 4 and outputs the resulting signal, a speaker 6 which outputs the analog audio signal from the AMP 5 as sound wave, a HD recorder/player 7 which records the music data from the DSP 2 on an HD 11 and reproduces the music data recorded on the HD 11, a controller 8 which controls operation of the above components, and an operation/display panel 9 which receives instructions entered by the user and outputs them to the controller 8 and displays predetermined information.

The CD player 1 has a mounting mechanism for mounting the CD 10, a pickup for optically reading music data recorded on the CD 10, a spindle motor for rotationally driving the CD 10, a servo circuit for servo-controlling the spindle motor and pickup, etc. It reproduces music data (LRCK, BCK, BDATA, C2PO, or other digital data signals) and outputs them to the DSP 2. Also, the CD player 1 reads TOC (Table Of Content) information recorded in the innermost part of the CD 10 and outputs it to the controller 8 . As is well known, the TOC information contains management information such as truck numbers, the number of pieces of music data, and reproduction (playback) time. Also, the CD player 1 can read text information and outputs it to the controller 8 if the CD 10 is not protected. The text information contains, for example, music title, album title, and the artist name. Since known technology can be used for the CD player 1, detailed description thereof will be omitted. Incidentally, the CD player 1 may be an ATAPI connection.

Also, although this embodiment uses the CD player 1, this embodiment may also use a DVD player for reproducing music data recorded on DVD, a MD player for reproducing music data recorded on MD, a card media player for reproducing music data recorded on card-type recording medium such as memory stick, or a combination thereof.

The DSP 2 has a logic circuit and memory circuit. It performs digital signal processing on the music data reproduced by the CD player 1. Specifically, it performs known acoustic treatment such as EFM (Eight to Fourteen Modulation) to the music data of RF (Radio Frequency) signal reproduced by the CD player 1. Then, it outputs the music data to the DAC 4 and the HD recorder/player 7 . Incidentally, the DSP 2 may output the music data to the HD recorder/player 7 after compressing them in a predetermined format such as MP3 or ATRAC3.

The HD recorder/player 7 has a buffer memory, HDD (Hard Disk Drive), etc. The music data outputted from the DSP 2 is stored temporarily in the buffer memory, and then recorded on the HD 11 by the HDD. Moreover, the music data reproduced from the HD 11 by the HDD is stored temporarily in the buffer memory, and then output to the DSP 2.

A music database and an album information database can be constructed on the HD 11. The music data outputted from the DSP 2 is recorded in the music database, being associated with music information (e.g., the TOC information and text information contained in the source CD 10) outputted from the controller 8. Thus, the music information is corresponded to the each piece of music data recorded in the music database. When the music data is recorded, the user can register music title etc. as the music information in the music database via the operation/display panel 9. Also, when the music data is recorded, the controller 8 can download music title, etc. as music information by accessing a server equipped with a predetermined database on the Internet via the communications unit 3 and register the music title, etc. in the music database.

The album information database records album information (e.g., TOC information, the album title, the artist name of the album, etc.) corresponding to the album containing a plurality of pieces of music data and music information (e.g., music titles) corresponding to each piece of the music data contained in the album. The album information and the music information can be downloaded from a predetermined database on a server over the Internet, for example, by the controller 8 which can access the server via the communications unit 3. This makes it possible to resister an album information corresponding to an album just released, and music information corresponding to each piece of the music data contained in the album in the album information database as needed.

Incidentally, the audio apparatus 100 may be equipped with a device for reading information recorded on a CD-ROM, card-type recording medium such as a memory stick, etc., read, therefrom, the album information and the music information, and register them in the album information database. In that case, the album information and the music information are recorded on a CD-ROM or card-type recording medium, and the recording medium is provided to the user periodically.

Since known technology can be used for the HD recorder/player 7, detailed description thereof will be omitted. Also, although this embodiment uses the HD recorder/player 7, this embodiment may use CD-R recorder/player for recording and reproducing music data to/from a CD-R, DVD-R/W recorder/player for recording and reproducing music data to/from a DVD-R/W, card media player for recording and reproducing music data to/from a card-type recording medium such as a memory stick, or a combination thereof.

The controller 8 has a CPU which has arithmetic capabilities, a working RAM, a ROM which stores various processing programs and data, a non-volatile memory such as EEPROM (Electrically Erasable Programmable Read Only Memory) for recording a list of the music information (described later) , etc. It controls reproducing operation of the CD player 1 and recording and reproducing operation of the HD recorder/player 7 under instructions from the operation/display panel 9. Also, the controller 8 makes the HD recorder/player 7 record the TOC information and text information outputted from the CD player 1 in the music database on the HD 11 with associating them with each piece of music data.

Also, the ROM of the controller 8 stores a list generation program, according to which the controller 8 having a computer functions as a music identification device, a determination device, a list generation device, a list recording device, a list display device, and an access device.

More specifically, upon receiving album information (e.g., the album title and artist name of the album) from the user via the operation/display panel 9, the controller 8 functioning as the music identification device identifies the album based on the received album information and identifies music information (e.g., music titles) corresponding to each piece of the music data contained in the identified album, by referring to the album information database on the HD 11 via the HD recorder/player 7.

Also, the controller 8 functioning as the determination device determines whether pieces of music data corresponding to the identified music information (e.g., music titles) have being recorded in the music database. The controller 8 also functioning as the list generation device generates a list of music information (e.g., music titles) to the each piece of music data determined to have being recorded in the music database.

Also, the controller 8 functioning as the list recording device records the generated list of music information (e.g., music titles) in the non-volatile memory. The controller 8 also functioning as the list display device displays the generated list of music information (e.g., music titles) on a display screen of the operation/display panel 9.

Also, the controller 8 functioning as access device accesses a server having the album information database via the communications unit 3 and the Internet.

The operation/display panel 9, which is equipped with operation buttons to allow the user to enter instructions, functions as an album information input device for receiving album information (e.g., the album title and artist name of the album) from the user, a display instruction input for receiving an instruction to display the list from the user, a reproduction instruction input device for receiving an instruction to reproduce music data corresponding to the music information contained in the generated list from the user, and a music selection input device for receiving an instruction to select the music information(e.g., music title) on the displayed list from the user. The operation/display panel 9 has an indicator for displaying predetermined information and displays the list on a display screen of the indicator.

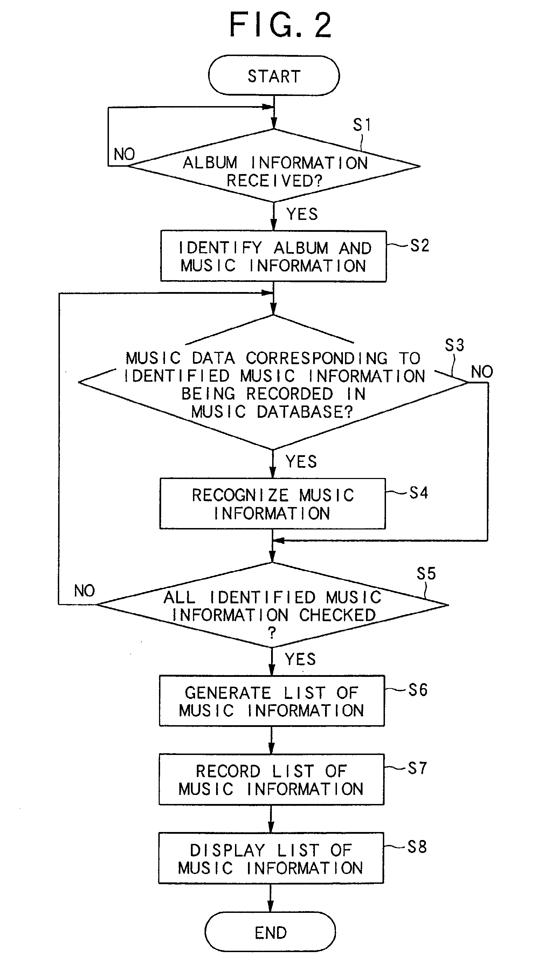

Next, list generation processing on the audio apparatus 100 will be described with reference to FIGS. 2 to 4.

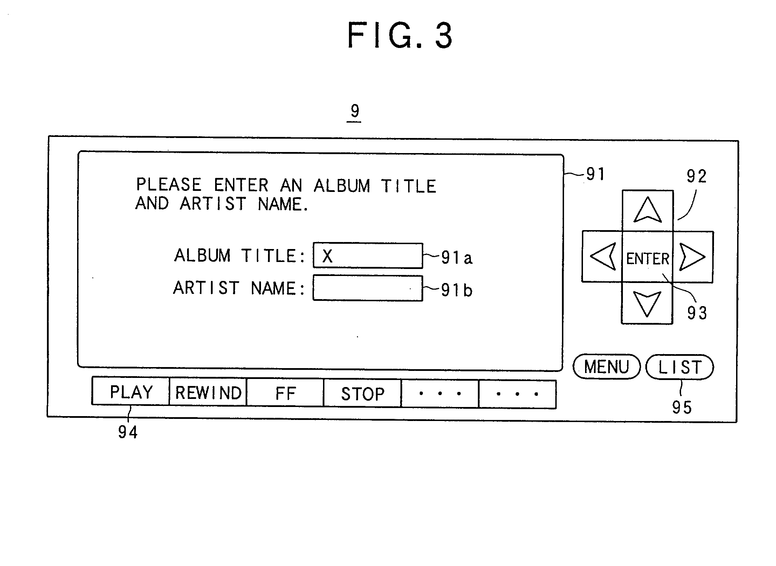

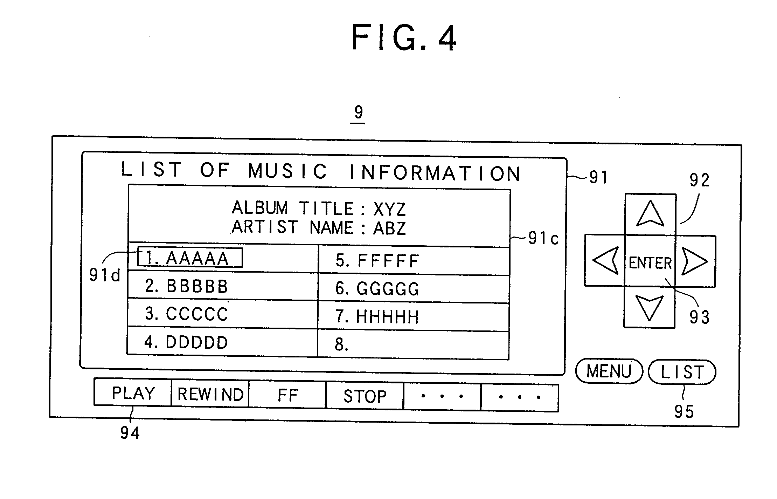

FIG. 2 is a flowchart showing a list generation process performed by the controller 8. FIG. 3 is a diagram showing an example of input screen of an album information on the display screen of a operation/display panel 9; and FIG. 4 is a diagram showing an example of a list of the music information on the display screen of the operation/display panel 9.

The process shown in FIG. 2 is started when the user presses a predetermined operation button on the operation/display panel 9 to give an instruction to start list generation process. As shown in FIG. 3, the input screen of an album information is displayed on the display screen 91 of the indicator on the operation/display panel 9. The user enters, for example, a desired album title on an input field 91a, and an artist name on an input field 91b, as the album information, by operating a cross-shaped button 92. That is, the operation/display panel 9 accepts the input of the album title and artist name. When the user presses an Enter button 93, the controller 8 judges that the album information is received (Step S1) and goes to Step S2.

Although an album title and artist name has been cited as an example of album information, this is not restrictive. An album title alone may be used or other elements (e.g., genre of the album) may be added. The point is that the album desired by the user can be identified.

Besides, although the user enters a desired album title in the input field 91a, and an artist name in the input field 91b according to this embodiment, it is also possible to display a plurality of album titles and artist names recorded in the album information database on the display screen 91, allowing the user to select a desired album title by operating the cross-shaped button 92.

In Step S2, the controller 8 identifies the album based on the received album information (the album title and artist name in this example) and identifies music information (e.g., music titles) corresponding to each piece of music data contained in the identified album, by referring to the album information database on the HD 11 via the HD recorder/player 7. Then it goes to Step S3. The pieces of music data corresponding to the music information identified here are a plurality of music pieces.

In Step S3, the controller 8 determines whether pieces of music data corresponding to the identified music information (e.g., music titles) have being recorded in the music database on the HD 11 by comparing the pieces of the music data one by one via the HD recorder/player 7. For example, it determines whether pieces of music data with the same music titles as the identified music titles are recorded in the music database. If it is determined as a result, for example, that pieces of music data corresponding to the identified music titles have being recorded, the controller 8 recognizes the music titles (Step S4) .

Next, the controller 8 judges whether all the identified music information (e.g., music titles) has been checked (Step S5). That is, since there are a plurality of pieces of music data corresponding to the identified music information, the controller 8 judges whether each piece of music data are recorded in the music database. If all the identified music information were checked, the controller 8 generates a list (list data) of the music information (e.g., music titles) recognized in Step S4 (Step S6). Then, the controller 8 records(stores) the generated list (list data) in the non-volatile memory (Step S7). Then, the controller 8 displays the generated list (list data) on the display screen 91 of the indicator on the operation/display panel 9 (Step S8).

In this way, as shown in FIG. 4, the list 91c of music information presented on the display screen 91 of the indicator on the operation/display panel 9 contains the album title "XYZ" and artist name "ABZ" entered by the user. The list 91c displays, in sequence, the music titles ("AAAAA," etc.) recognized in Step S4. Needless to say, any music title not recognized in Step S4 (music title of piece of music data not recorded in the music database) is not presented in the list 91c.

In the example of FIG. 4, a cursor 91d is displayed on the music title "AAAAA" in the list 91c. The cursor 91d moves over music titles as the cross-shaped button 92 is manipulated. This allows the user to select a music title in the list 91c. Then, when the user presses a Play button 94, for example, the controller 8 makes the HD recorder/player 7 reproduce piece of the music data corresponding to the music title under the cursor 91d, i.e., the music title selected by the user. Consequently, the music data is reproduced from the HD 11 by HD recorder/player 7.

Since a list once generated is recorded in the non-volatile memory, even after it is erased from the display screen 91 of the indicator on the operation/display panel 9, the controller 8 can read it out of the non-volatile memory and display it on the display screen 91 when the user presses a List button 95, for example.

Instead of reading a list from the non-volatile memory and displaying it on the display screen 91 of the indicator on the operation/display panel 9, it may be constituted so that the piece of music data corresponding to a music title in the list will be reproduced when a predetermined button is pressed.

As described above, since an album is identified based on an album title entered by the user, music titles corresponding to each piece of music data contained in the identified album are identified, a list of the music titles corresponding to the each piece of music data recorded in the music database from among identified music titles, is generated, and the list is displayed on the display screen 91, it can easily provide a best album, singles collection, or similar CD album of a desired artist to the user using the pieces of music data recorded in the music database even if the user does not buy the new CD album such as the best album, singles collection of the desired artist.

Incidentally, in Step S2 of the above embodiment, the controller 8 identifies the album and the music information, by referring to the album information database on the HD 11. Alternatively, it is possible to use another configuration in which an album information database is provided on a server on the Internet and the controller 8 identifies an album based on album information and identifies music information corresponding to each piece of music data contained in the identified album by accessing the server and referring to the album information database via the communications unit 3. Such a configuration will make it possible to reduce (save) the recording capacity of the HD 11 and allows the user to always use the latest album information and the music information corresponding to pieces of music data contained in the latest album.

Moreover, in Step S3 of the above embodiment, the controller 8 determines whether pieces of music data corresponding to the identified music information (e.g., music titles) have being recorded in the music database on the HD 11, and music information corresponding to pieces of any music data which is not recorded in the database is not registered in the list. However, the controller 8 may add music information corresponding to such piece of music data to the list later when piece of the music data is recorded in the database. In that case, a desired album which is not completed at some time can be completed later. This means improved convenience.

Also, although a list of music titles has been cited as an example of a list of the music information in the above embodiment, this is not restrictive. A list of other elements (e.g., track numbers) may also be used.

Also, although a non-volatile memory is used as recording medium for recording the list of the music information in the above embodiment, this is not restrictive. The list of music information may be recorded on the HD 11.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A music recording/reproducing apparatus which has a music database for recording a plurality of pieces of music data and music information corresponding to the each piece of music data, and reproduces the music data recorded in the music database, **characterized in that** the apparatus (100) comprises:
an album information database for recording album information corresponding to an album containing a plurality of pieces of music data and the music information corresponding to each piece of the music data contained in the album;
an album information input device (9) which receives album information from a user;
a music identification device(8) which identifies the album based on the received album information and identifies the music information corresponding to each piece of the music data contained in the identified album, by referring to the album information database;
a determination device(8) which determines whether the pieces of music data corresponding to the identified music information have being recorded in the music database; and
a list generation device(8) which generates a list of the music information corresponding to the each piece of music data determined to have being recorded in the music database.

2. A music recording/reproducing apparatus which has a music database for recording a plurality of pieces of music data and music information corresponding to the each piece of music data, and reproduces the music data recorded in the music database, **characterized in that** the apparatus (100) comprises:
an access device(3,8) which accesses, via a network, a server having an album information database for recording album information corresponding to an album containing a plurality of pieces of music data and the music information corresponding to each piece of the music data contained in the album;
an album information input (9) device which receives album information from a user;
a music identification device(8) which identifies the album based on the received album information and identifies the music information corresponding to each piece of the music data contained in the identified album, by referring to the album information database in the server through the access device;
a determination device(8) which determines whether the pieces of music data corresponding to the identified music information have being recorded in the music database; and
a list generation device(8) which generates a list of the music information corresponding to the each piece of music data determined to have being recorded in the music database.

3. The music recording/reproducing apparatus according to claim 1 or 2, comprising:
a list display device(8,9) which displays the generated list on a display screen.

4. The music recording/reproducing apparatus according to claim 1 or 2, comprising:
a list recording device(8) which records the generated list on recording medium;
a display instruction input device(9) which receives an instruction to display the list from the user; and
a list display device(8) which reads the list from the recording device and displays it on a display screen when the instruction to display the list is received.

5. The music recording/reproducing apparatus according to claim 3 or 4, comprising:
a music selection input device(9) which receives, form the user, an instruction to select the music information on the displayed list; and
a music reproducing device(7,8) which reproduces music data corresponding to the selected music information.

6. The music recording/reproducing apparatus according to any one of claims 1 to 4, comprising:
a reproduction instruction input device (9) which receives, from the user, an instruction to reproduce music data corresponding to the music information contained in the generated list; and
a music reproducing device(7,8) which reproduces music data corresponding to the music information contained in the list when the instruction to reproduce music data is received.

7. A list generation method for a music recording/ reproducing apparatus which has a music database for recording a plurality of pieces of music data and music information corresponding to the each piece of music data, and reproduces the music data recorded in the music database, **characterized in that** the method comprises:
a process of receiving album information from a user;
a process of identifying the album based on the received album information and identifying the music information corresponding to each piece of the music data contained in the identified album, by referring to the album information database for recording album information corresponding to an album containing a plurality of pieces of music data and the music information corresponding to each piece of the music data contained in the album;
a process of determining whether the pieces of music data corresponding to the identified music information have being recorded in the music database; and
a process of generating a list of the music information corresponding to the each piece of music data determined to have being recorded in the music database.

8. A list generation method for a music recording/ reproducing apparatus which has a music database for recording a plurality of pieces of music data and music information corresponding to the each piece of music data, and reproduces the music data recorded in the music database, **characterized in that** the method comprises:
a process of receiving album information from a user;
a process of accessing, via a network, a server having an album information database for recording album information corresponding to an album containing a plurality of pieces of music data and the music information corresponding to each piece of the music data contained in the album;
a process of identifying the album based on the received album information and identifying the music information corresponding to each piece of the music data contained in the identified album, by referring to the album information database in the server through the network;
a process of determining whether the pieces of music data corresponding to the identified music information have being recorded in the music database; and
a process of generating a list of the music information corresponding to the each piece of music data determined to have being recorded in the music database.

9. An information recorded medium wherein a program for a computer which reproduces music data recorded in the music database for recording a plurality of pieces of music data and music information corresponding to the each piece of music data, is recorded so as to be read by the computer, the program makes the computer function as:
receiving album information from a user;
identifying the album based on the received album information and identifying the music information corresponding to each piece of the music data contained in the identified album, by referring to the album information database for recording album information corresponding to an album containing a plurality of pieces of music data and the music information corresponding to each piece of the music data contained in the album;
determining whether the pieces of music data corresponding to the identified music information have being recorded in the music database; and
generating a list of the music information corresponding to the each piece of music data determined to have being recorded in the music database.

10. An information recorded medium wherein a program for a computer which reproduces music data recorded in the music database for recording a plurality of pieces of music data and music information corresponding to the each piece of music data, is recorded so as to be read by the computer, the program makes the computer function as:
receiving album information from a user;
accessing, via a network, a server having an album information database for recording album information corresponding to an album containing a plurality of pieces of music data and the music information corresponding to each piece of the music data contained in the album;
identifying the album based on the received album information and identifying the music information corresponding to each piece of the music data contained in the identified album, by referring to the album information database in the server through the network;
determining whether the pieces of music data corresponding to the identified music information have being recorded in the music database; and
generating a list of the music information corresponding to the each piece of music data determined to have being recorded in the music database.
